# EUROPEAN PATENT SPECIFICATION

(11) **EP 2 501 578 B1**
(45) Date of publication and mention of the grant of the patent: **06.08.2014**
(21) Application number: 10830268.8
(22) Date of filing: 15.10.2010
(51) Int. Cl.: B60K 1/04, B60L 11/18, B60L 3/04, B60R 21/16

(54) **A SAFETY ARRANGEMENT FOR PROCTECTING A BATTERY IN A MOTOR VEHICLE**
SICHERE ANORDNUNG FÜR DEN SCHUTZ EINER BATTERIE IN EINEM KRAFTFAHRZEUG
DISPOSITIF DE SÉCURITÉ DESTINÉ À PROTÉGER UN ACCUMULATEUR DANS UN VÉHICULE MOTORISÉ

(30) Priority: 16.11.2009 GB 0920051
(43) Date of publication of application: 26.09.2012
(73) Proprietor: Autoliv Development AB, 447 83 Vårgårda (SE)
(72) Inventor: DE OLIVEIRA, Nelson, F-76000 Rouen (FR)
(74) Representative: Parry, Simon James
(86) International application number: PCT/SE2010/051113
(87) International publication number: WO 2011/059374

(56) References cited:
- EP-A1- 1 645 475
- WO-A1-2008/076040
- FR-A1- 2 684 624
- JP-A- H1 016 689
- JP-A- 10 016 689
- JP-A- 2008 230 519

## Description

The present invention relates to a safety arrangement for a motor vehicle. More particularly, the invention relates to a safety arrangement for a motor vehicle having a battery such as, for example, an electric vehicle or a so-called hybrid motor vehicle.

In view of increasing concerns over the environmental impact of motor vehicles powered by internal combustion engines, there is now increased interest and importance in providing so called "cleaner" motor vehicles which produce less pollution in the form of gases which are deemed harmful to the environment. Accordingly, it is becoming more and more common to provide motor vehicles which are powered electrically, at least during periods of their operation. For example, it has been proposed to provide electric vehicles which are driven by a large electrical motor drawing its power from a rechargeable battery.

It has also been proposed to provide so-called "hybrid" motor vehicles which typically combine a small, efficient and "clean" internal combustion engine with an electric motor. Hybrid vehicles of this type are configured to be driven by the electric motor whenever possible or convenient, but are driven by the internal combustion engine when the propulsive power offered by the motor is insufficient to meet the instant performance demand, for example because the demand simply exceeds the performance limits of the motor, or because the battery from which the motor draws its power contains insufficient charge. In such an arrangement, the motor typically draws its electric power from a large capacity rechargeable battery arranged to charge from an alternator connected to the engine when the combustion engine is running. However, it has also been proposed to provide electricdrive arrangements in which the motor draws its electric power from a series of high-capacity capacitors rather than from an electrochemical battery as such. The term "battery" as used in this patent specification is therefore intended to refer to any suitable electrical energy storage device including, but not limited to, an electrochemical battery, a capacitor, a super-capacitor etc.

As will be appreciated, electrically powered vehicles and so-called hybrid vehicles of the general type described above therefore require relatively large batteries in order to provide sufficient electrical power for the propulsive motor. Accordingly, such batteries are typically configured to be very high voltage (typically approximately 300V) and to store a very significant amount of electrical energy (typically between 2 - 10 kWh), and as such represent a significant electrical hazard, particularly in the event of the vehicle being involved in a crash, or an internal short-circuit occurring within the battery. Additionally, batteries of a type suitable for use in electric or hybrid vehicles presently contribute very significantly to the overall cost of the vehicle. For example, it is not uncommon for the battery unit of such a vehicle to account for 10-30% of the total cost of the vehicle. It is therefore desirable to protect the battery unit from damage in the event that the vehicle is involved in an accident, thereby facilitating less-expensive repair of the vehicle.

It is common to locate the relatively large battery of an electric or hybrid motor vehicle in the region of the vehicle's floor pan, where its large size can be most readily accommodated and where its mass is kept relatively low so as not to adversely affect the overall centre of gravity of the vehicle. Also, because many such batteries are relatively large, they can often occupy a significant portion of the width of the vehicle. This means that, during a crash, impact with an external object may result in an intrusion into the battery compartment and localised penetrative damage to the battery, which can result in a significant risk of explosion, fire or electrocution.

There is therefore a need for a safety arrangement which addresses these risks.

JP1001-6689-A discloses the features mentioned in the preamble of claim 1. FR2684624-A1 discloses an energy absorber intended to damp a front impact in an electric vehicle. JP2008-230519-A discloses a case for a fuel cell.

It is an object of the present invention to provide an improved safety arrangement for a motor vehicle having a battery.

Whilst the invention described herein is particularly suitable for use in vehicles having a large capacity battery to power a propulsive motor, it should be noted that the application could also be used in a motor vehicle with a relatively small capacity battery provided to start an internal combustion engine.

According to a first aspect of the present invention, there is provided a safety arrangement for protecting a battery in a motor vehicle from damage in the event that the vehicle is involved in an accident, the arrangement incorporating an inflatable unit comprising: an inflator configured for actuation upon receipt of an actuating signal from a crash sensor; a substantially rigid wall member and a flexible layer of sheet material being secured to one another to thereby define an inflatable chamber between said wall member and said flexible layer for inflation by the inflator; the wall member being mounted in spaced relation to the battery, and the flexible layer being substantially interposed between the wall member and the battery, such that inflation of said chamber by said inflator upon receipt of said actuating signal is effective to urge said flexible layer towards said battery.

According to another aspect of the invention, there is provided a safety arrangement in a motor vehicle having a battery, the arrangement incorporating an inflatable unit comprising:an inflator configured for actuation upon receipt of an actuating signal from a crash sensor; a substantially rigid wall member and a flexible layer of sheet material being secured to one another to thereby define an inflatable chamber between said wall member and said flexible layer for inflation by the inflator; the wall member being mounted in spaced relation to the battery, and the flexible layer being substantially interposed between the wall member and the battery, such that inflation of said chamber by said inflator upon receipt of said actuating signal is effective to urge said flexible layer towards said battery.

Preferably, said wall member is mounted to a structural part of the motor vehicle.

Conveniently, said wall member is mounted to a side sill of the motor vehicle, generally adjacent the battery.

The wall member is preferably formed of metal. In a preferred arrangement, the wall member is formed from metal plate.

Advantageously, the wall member is plastically deformable

Preferably, the safety arrangement is configured such that in the absence of any movement of said wall member towards said battery, a gap is defined between the flexible layer and the battery upon inflation of said chamber

Advantageously, said gap is no more than 5 mm across.

Conveniently, the safety arrangement is configured such that deformation or movement of said wall member towards the battery is effective to close said gap such that the flexible member impinges on at least part of the battery.

Preferably, the flexible layer is formed from woven fabric material.

Advantageously, the safety arrangement comprises a pair of said inflatable units, the units being arranged on opposite sides of the battery.

Conveniently, the safety arrangement comprises two said pairs of inflatable units, the units of one pair being arranged along respective sides of the vehicle, and the units of the other pair being arranged at the front and back of the battery respectively.

Preferably, each said unit of one pair is connected between the two units of the other pair.

Advantageously, the safety arrangement comprises a plurality of said inflatable units arranged in an array around the battery so as to substantially enclose the battery.

Preferably, the motor vehicle is an electric or hybrid vehicle configured to draw propulsive power from said battery.

The safety arrangement preferably comprises at least one inflator, such as a gas generator or the like, configured to inflate the or each said unit upon receipt of an actuating signal from a crash sensor.

So that the invention may be more readily understood, and so that further features thereof may be appreciated, embodiments of the invention will now be described by way of example with reference to the accompanying drawings in which:
Figure 1 is a schematic illustration showing an electric or hybrid vehicle in a collision with another vehicle;
Figure 2 is a transverse cross-sectional view showing a sill region of the vehicle structure, adjacent the vehicle's battery;
Figure 3 is a view corresponding generally to that of figure 2, but which shows a safety arrangement in accordance with an embodiment of the present invention;
Figure 4 is a perspective illustration showing a wall member of the safety arrangement;
Figure 5 is a perspective illustration showing a flexible layer of sheet material;
Figure 6 is a vertical cross-sectional view showing the wall member of figure 4 and the flexible layer of figure 5 secured together;
Figure 7 is an enlarged perspective view of an end region of the wall member, mounted to the sill of a motor vehicle and fitted with the flexible layer;
Figure 8 is a vertical cross-sectional view taken through the end of the arrangement illustrated in figure 7;
Figure 9 is a schematic vertical sectional view showing actuation of the safety arrangement adjacent the battery;
Figure 10 is a schematic horizontal sectional view showing the safety arrangement following deformation from a crash;
Figure 11 is a schematic perspective view, showing a safety arrangement in accordance with another embodiment of the present invention;
Figure 12 is a schematic horizontal sectional view showing part of the safety arrangement of figure 11 in combination with a battery; and
Figure 13 is a view corresponding generally to that of figure 12, but which shows the safety arrangement in an actuated condition.

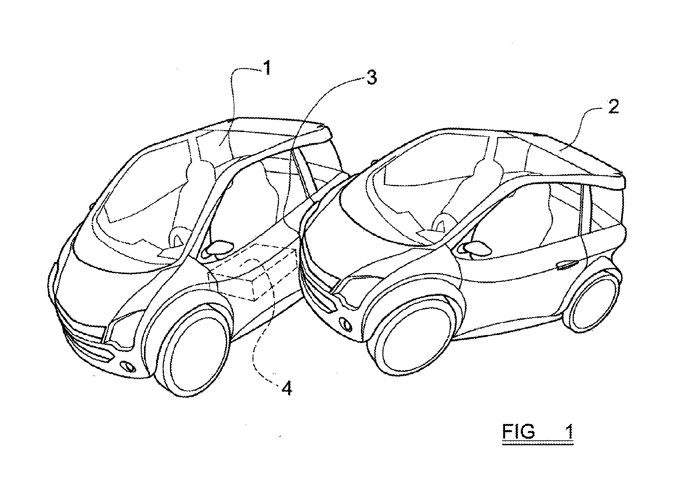

Referring now in more detail to Figure 1, there is illustrated an electric or hybrid motor vehicle 1 in an oblique side impact collision with another motor vehicle 2. In particular, it will be seen that the other motor vehicle 2 is shown colliding with the electric or hybrid vehicle 1 such that impact occurs in the lower side region of the vehicle 1, as indicated generally at 3.

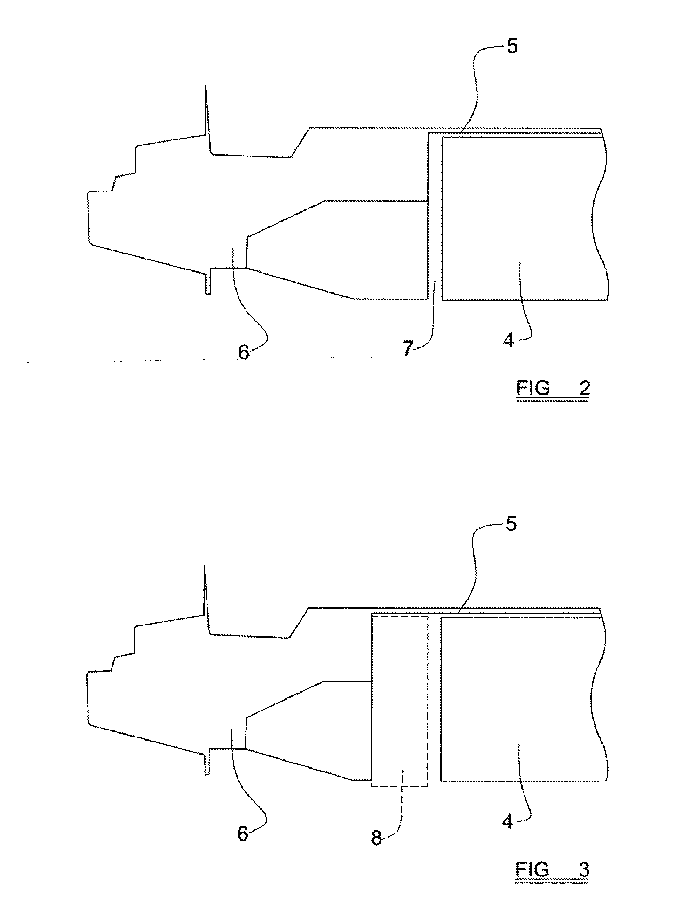

The electric or hybrid motor vehicle 1 incorporates a relatively large propulsive battery 4 which is mounted in the floor region of the vehicle 1, and preferably is mounted immediately beneath the inner floor 5 of the vehicle, as illustrated more clearly in Figure 2. As will be appreciated by those with skill in the art, the chassis structure of the vehicle 1 is generally configured so as to comprise a pair of side sills 6 (only one of which is illustrated in Figure 2), each side sill 6 running along a respective side of the motor vehicle and representing a structural component of the vehicle chassis. As illustrated in Figure 2, the battery 4 is typically located between the two spaced apart side sills 6, and due to its size is spaced from the side sills only by a relatively small gap 7. As will thus be appreciated, in the event of a side impact collision of the type illustrated schematically in Figure 1, the side sill 6 may become dented or otherwise deformed by impact with the colliding vehicle 2, and so may move towards and possibly into contact with the vehicle battery 4. Intrusion of the sill structure 6 into the housing of the battery 4 can be extremely dangerous for the reasons already discussed generally above.

Turning therefore to consider Figure 3, there is illustrated a region of the side structure of the motor vehicle chassis, the motor vehicle 1 being provided with a safety arrangement in accordance with the present invention in order to offer an increased level of protection to the vehicle battery 4 in the event of a crash such as a side impact crash of the type illustrated in Figure 1. More particularly, the safety arrangement incorporates an inflatable unit 8 whose general position is illustrated schematically by dashed line in Figure 3. The inflatable unit 8 is configured for inflation upon detection of an impending or actual crash situation in order to offer an increased level of protection for the battery 4 in a manner which will be described in more detail below.

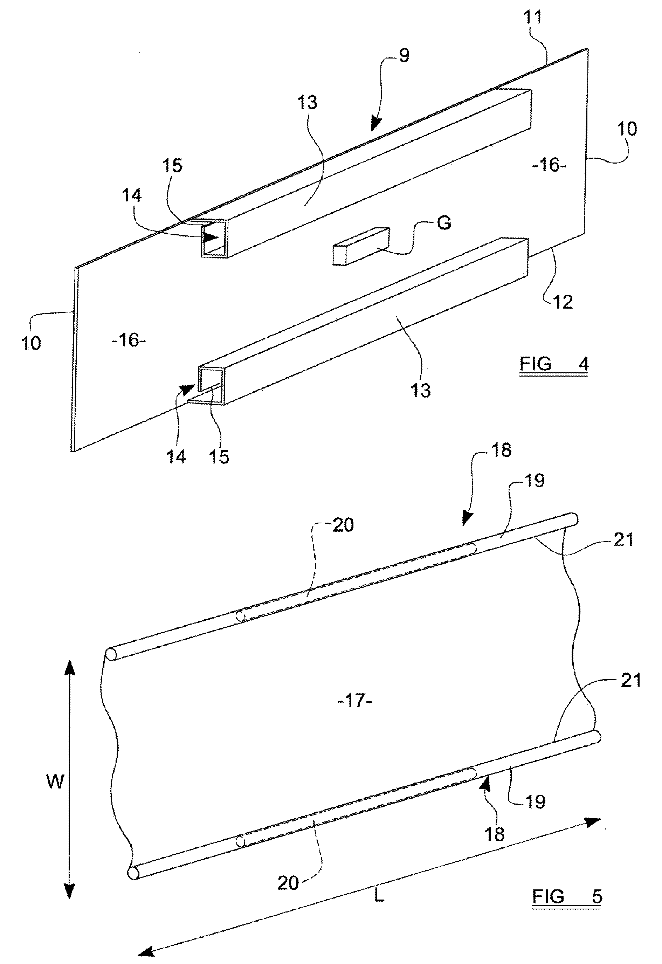

The inflatable unit 8 comprises a substantially rigid wall member 9, the preferred configuration of which is illustrated schematically in Figure 4. The illustrated wall member 9 has a generally elongate and rectangular configuration, having a pair of relatively short end edges 10, a relatively long top edge 11 and a relatively long bottom edge 12 of substantially equal length to the top edge 11. The wall member 9 is preferably formed from relatively thick metal plate. For example, it is envisaged that the wall member could be formed from steel plate, such as so-called High Speed Steel (HSS), or Ultra High Speed Steel (UHSS). Alternatively, the wall member could be formed of aluminium plate, or indeed from other convenient alloys. It is proposed that the metal plate will have sufficient thickness to withstand typical crash loads during deformation without buckling locally. Simply by way of example, it is envisaged that in an arrangement having a wall member 9 formed from UHSS plate, it may have a thickness of approximately 0.8mm.

Along the central region of the top and bottom edges 11, 12, there is provided a respective elongate channel 13. The channels 13 are open at both ends and are preferably formed integrally with the metal plate of the wall member 9, for example by bending or folding the sheet metal from which the wall member is fabricated. However, it is to be appreciated that the channels could be formed integrally via extrusion, particularly, for example, in the case that the wall member is formed from aluminium or an alloy thereof.

As illustrated in Figure 4, each channel 13 defines an elongate inner recess 14, each recess 14 being open at its ends, but also being open along a narrow elongate slot 15 defined generally adjacent the respective edge 11, 12 of the wall member.

The wall member 9 defines a pair of generally planar end regions 16 at opposite ends of the wall member, between the end edges 10 and the ends of the channels 13.

An inflator G, which preferably takes the form of a gas generator of a type known *per se,* is mounted to the wall member 9. In the particular arrangement illustrated in figure 4, the inflator is mounted in a generally central position, between the two channels 13. However, it is to be appreciated that in variants of the invention the inflator G could be mounted in alternative positions.

Figure 5 illustrates a flexible layer 17 which is formed from sheet material such as, most preferably, woven fabric (coated or uncoated) or other convenient textile material. The flexible layer 17 is generally elongate in form, having a length L which is generally comparable to the overall length of the wall member 9, but which has a width W which is significantly larger than the height of the wall member 9 as defined by the end edges 10. Each long side edge 18 of the flexible layer 17 is provided with an elongate sleeve 19 within which are provided respective elongate fixing rods 20. Each fixing rod 20 has a length which is substantially equal to or slightly less than the channels 13 provided on the wall member 9. The fixing rods 20 are illustrated in Figure 5 having been inserted into respective sleeves 19 such that each rod 20 is located in a generally central position within the respective sleeve.

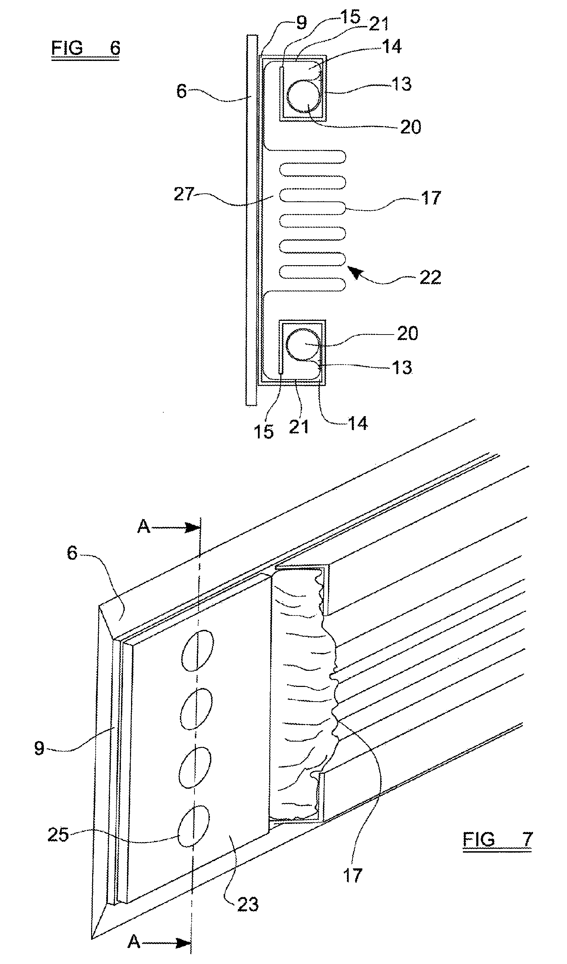

The flexible layer 17, together with its associated fixing rods 20 is secured to the wall member 9 by inserting each fixing rod 20 into a respective channel 13 of the wall member 9 in a sliding manner such that the fixing rods 9 will become accommodated within the recesses 14. As illustrated in Figure 6, the edge regions 21 of the flexible layer 17, generally adjacent the fixing rods 20 are thus received within respective slots 15 such that the main bulk of the flexible layer 17 may be gathered up, for example by being rolled or otherwise packaged into a compact package 22 which can be accommodated and received within the space defined between the two channels 13.

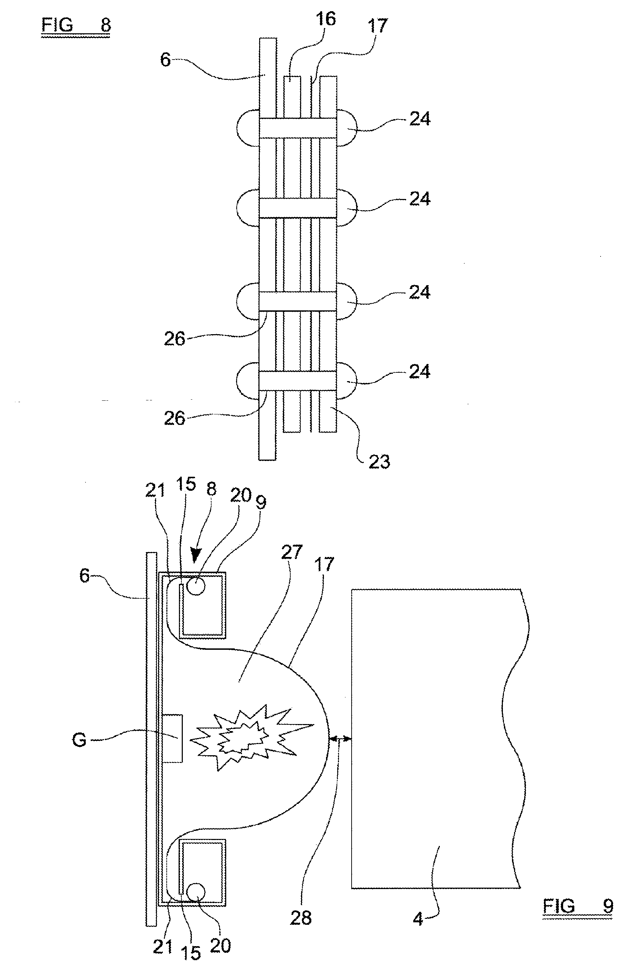

As will be appreciated, following insertion of the fixing rods 20 into the respective channels 13 in the manner described above and illustrated schematically in Figure 6, the end regions of the flexible member 17 will be loose and unconnected to the wall member 9. The end regions of the flexible member 17 are thus then tightly clamped against the planar end regions 16 of the wall member 9 via respective clamping plates 23 (only one of which is shown in Figure 7). Each clamping plate 23 is secured to a respective end region 16 of the wall member 9 via a convenient fixing arrangement such as, for example, a plurality of fixing rivets 24 (illustrated most clearly in Figure 8) which are inserted through respective mounting apertures 25 formed through the clamping plate 23. The rivets 24 are punched through the fabric of the flexible layer 17 which is trapped between the end region 16 of the wall member 9 and the clamping plate 23.

Following fabrication of the inflatable unit 8 in the manner described above, the unit 8 may then be mounted to the side sill 6 of the motor vehicle as illustrated in Figures 6 and 7. However, as illustrated in Figure 8, it is envisaged that the rivets 24 or other convenient fixtures which are used to secure the clamping plates 23 to the end regions 16 of the wall member may also be used to mount the inflatable unit 8 to the side sill 6 of the motor vehicle. For example, as illustrated in Figure 8, the rivets 24 may continue through the end regions 16 of the wall member so as to subsequently extend through respective mounting apertures 26 formed in the side sill 6.

As will be appreciated, when the flexible member 17 is secured to the wall member 9 in the manner described above, an inflatable chamber 27 is defined between the wall member 9 and the flexible layer 17.

Figure 9 illustrates the inflatable unit 8 mounted in position against the side sill 6 of the motor vehicle, the side sill 6 being spaced from the vehicle battery 4. Figure 9 actually illustrates the inflatable unit 8 following actuation of the safety arrangement such that the gas generator G has been actuated upon receipt of an actuating signal from a crash sensor so as to generate a large volume of inflating gas within the inflatable chamber 27. As will be seen, because the inflatable unit 8 is mounted in position such that the flexible layer 17 is substantially interposed between the wall member 9 and the battery 4, inflation of the inflatable chamber 7 is thus effective to urge the flexible member 17 towards the battery 4 as the initially packed package 22 unfolds during inflation.

As also illustrated in Figure 9, as the pressure within the inflatable chamber 27 builds, the side edge regions 21 of the flexible layer 17, which run generally adjacent the sleeves 19 and hence also the fixing rods 20, are pulled through the elongate slots 15 such that the fixing rods 20 are pulled tightly against the slots 15, thus effectively sealing the slots in a substantially gas-tight manner.

Figure 9 illustrates the safety arrangement of the present invention immediately following actuation, and hence inflation of the inflatable unit 8. In this condition, which is illustrated prior to any movement or deformation of the side sill 6 of the motor vehicle, the flexible layer 17 is preferably spaced from the vehicle battery 4 by a small gap 28. The gap is preferably of the order of 5 mm or less.

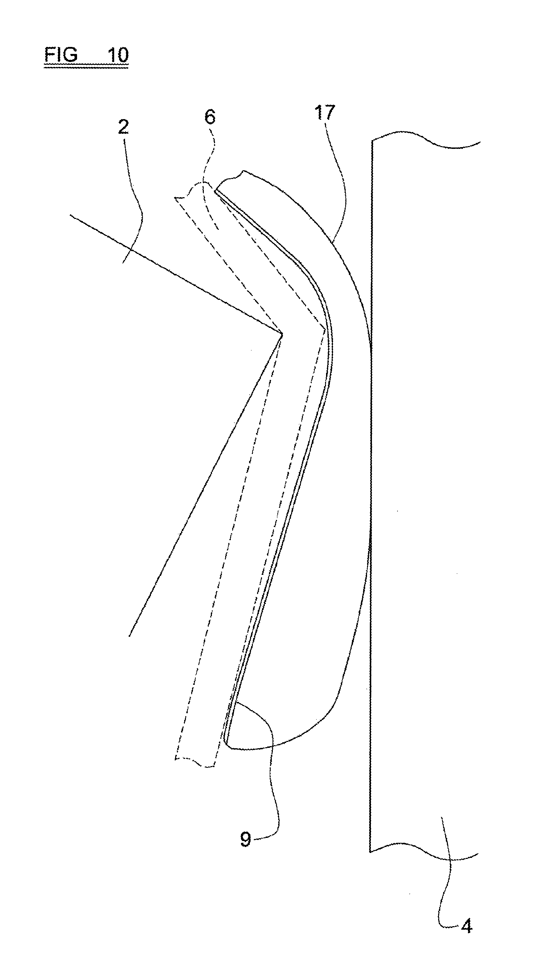

Inflation of the inflatable element 8 in the manner described above provides a pressurised cushion of gas generally adjacent the battery 4, between the battery 4 and the structural side sill 6 of the motor vehicle. Figure 10 illustrates, in horizontal cross-section, the situation at a later stage during a side impact collision involving the motor vehicle 1. In this condition, the colliding vehicle 2 has caused significant deformation to the side structure 6 of the motor vehicle. Because the wall member 9 is formed of metal plate, although it is substantially rigid it is nevertheless plastically deformable when subjected to severe forces such as those which might occur in a side impact collision. The wall member 9 is thus able to deform, thereby absorbing a significant proportion of the energy arising from the accident situation, and preventing intrusion of the buckled sill 6 into the vehicle battery 4. The resulting deformation of the wall member 9 serves to close the initial gap 28 between the flexible layer 17 and the battery 4 and so the flexible layer 17 impinges on the side region of the battery 4 and thus conforms to the profile of the battery. The inflated cushion created by the inflation of the chamber 27 thus serves to distribute the forces arising from the crash more evenly within the inflatable unit 8.

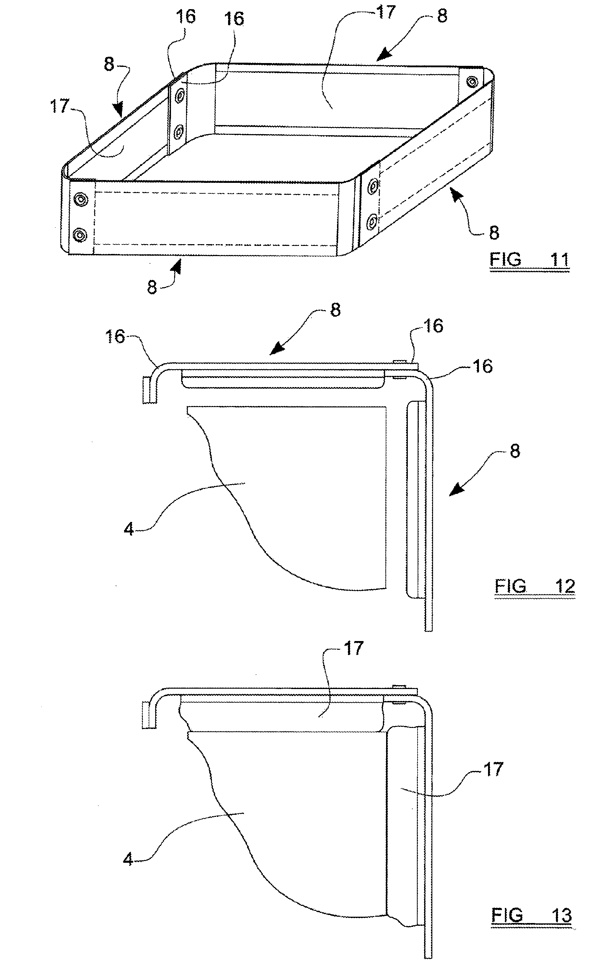

Turning now to consider Figures 11 to 13, there is illustrated an alternative embodiment of the present invention which comprises four inflatable units 8, each of which has a configuration generally similar to that described above. In this arrangement, the inflatable units 8 are arranged in a generally square array around a central battery 4 so as to substantially enclose the battery when viewed from above. More particularly, it will be seen that the arrangement effectively comprises two pairs of inflatable units, the units 8 of one pair being arranged along respective sides of the vehicle and hence adjacent respective sides of the battery, whilst the units 8 of the other pair are arranged at the front and back of the battery respectively. More particularly, it can be seen that each inflatable unit 8 is configured such that one of its end regions 16 is bent through 90° and is secured in a clamping manner to an adjacent planar end region 16 of the neighbouring unit. In this manner, the bent end region 16 of one unit 8 can effectively replace the clamping plate 23 of the embodiments described above with reference to Figures 3 to 10, and thus effectively serves to clampingly secure an end region of the flexible layer 17 of the neighbouring unit 8 in position.

Figure 12 illustrates two neighbouring inflatable units connected together in the manner described above, each being illustrated in its unactuated condition prior to inflation. Conversely, Figure 13 illustrates the arrangement following actuation and so shows the respective units in an inflated condition such that their flexible layers 17 have been urged towards the vehicle battery 4.

Whilst the invention has been described above with reference to specific embodiments of the present invention, it should be appreciated that various modifications or alterations can be made without departing from the scope of the claimed invention. For example, it is envisaged that the gas generator G could comprise a deflagrating chords or the like, which may be affixed to the wall member 9.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof, as defined in the claims.

## Claims

1. A safety arrangement for protecting a battery (4) in a motor vehicle (1) from damage in the event that the vehicle (1) is involved in an accident, the arrangement incorporating an inflatable unit (8) comprising: an inflator (G) configured for actuation upon receipt of an actuating signal from a crash sensor; a substantially rigid wall member (9) and a flexible layer (17), the wall member (9) being mounted in spaced relation to the battery (4), and the flexible layer (17) being substantially interposed between the wall member (9) and the battery (4), such that inflation of said chamber (27) by said inflator (G) upon receipt of said actuating signal is effective to urge said flexible layer (17) towards said battery (4), **characterized in that** the flexible (17) layer (17) is made of sheet material secured to the rigid wall member (9) to thereby define an inflatable chamber (27) between said wall member (9) and said flexible layer (17) for inflation by the inflator (G).

2. A safety arrangement according to claim 1, wherein said wall member (9) is mounted to a structural part (6) of the motor vehicle (1).

3. A safety arrangement according to claim 2, wherein said wall member (9) is mounted to a side sill (6) of the motor vehicle (1), generally adjacent the battery (4).

4. A safety arrangement according to any preceding claim, wherein the wall member (9) is formed of metal.

5. A safety arrangement according to claim 4, wherein the wall member (9) is formed from metal plate.

6. A safety arrangement according to any preceding claim, wherein the wall member (9) is plastically deformable.

7. A safety arrangement according to any preceding claim, configured such that in the absence of any movement of said wall member (9) towards said battery (4), a gap (28) is defined between the flexible layer (17) and the battery (4) upon inflation of said chamber (27).

8. A safety arrangement according to claim 7, wherein said gap (28) is no more than 5 mm across.

9. A safety arrangement according to claim 7 or claim 8, configured such that deformation or movement of said wall member (9) towards the battery (4) is effective to close said gap (28) such that the flexible member (17) impinges on at least part of the battery (4).

10. A safety arrangement according to any preceding claim, wherein the flexible layer (17) is formed from woven fabric material.

11. A safety arrangement according to any preceding claim comprising a pair of said inflatable units (8), the units (8) being arranged on opposite sides of the battery (4).

12. A safety arrangement according to claim 11, comprising two said pairs of inflatable units (8), the units (8) of one pair being arranged along respective sides of the vehicle (1), and the units of the other pair being arranged at the front and back of the battery (4) respectively.

13. A safety arrangement according to claim 12, wherein each said unit (8) of one pair is connected between the two units (8) of the other pair.

14. A safety arrangement according to any preceding claim, comprising a plurality of said inflatable units (8) arranged in an array around the battery (4), so as to substantially enclose the battery (4).

15. A safety arrangement according to any preceding claim, wherein the motor vehicle (1) is an electric or hybrid vehicle configured to draw propulsive power from said battery (4).

## Patentansprüche

1. Sicherheitsanordnung für den Schutz einer Batterie (4) in einem Kraftfahrzeug (1) vor Beschädigungen für den Fall, dass das Fahrzeug (1) in einen Unfall verwickelt ist, wobei die Anordnung eine füllbare Einheit (8) beinhaltet, die Folgendes umfasst: einen Gasgenerator (G), der so eingerichtet ist, dass er beim Empfang eines Auslösesignals von einem Aufprallsensor auslöst; ein im Wesentlichen starres Wandelement (9) und eine flexible Schicht (17), wobei das Wandelement (9) in einer beabstandeten Beziehung zu der Batterie (4) montiert ist und die flexible Schicht (17) im Wesentlichen zwischen dem Wandelement (9) und der Batterie (4) angeordnet ist, sodass das Füllen der Kammer (27) durch den Gasgenerator (G) beim Empfang des Auslösesignals bewirkt, dass die flexible Schicht (17) in Richtung der Batterie (4) gedrückt wird, **dadurch gekennzeichnet, dass** die flexible Schicht (17) aus Bahnmaterial gefertigt ist, das an dem starren Wandelement (9) gesichert ist und dadurch eine zum Füllen durch den Gasgenerator (G) bestimmte füllbare Kammer (27) zwischen dem Wandelement (9) und der flexiblen Schicht (17) definiert.

2. Sicherheitsanordnung nach Anspruch 1, wobei das Wandelement (9) an einem Konstruktionsteil (6) des Kraftfahrzeugs (1) montiert ist.

3. Sicherheitsanordnung nach Anspruch 2, wobei das Wandelement (9) an einem seitlichen Schweller (6) des Kraftfahrzeugs (1) ganz allgemein angrenzend an der Batterie (4) montiert ist.

4. Sicherheitsanordnung nach einem vorhergehenden Anspruch, wobei das Wandelement (9) aus Metall geformt ist.

5. Sicherheitsanordnung nach Anspruch 4, wobei das Wandelement (9) aus einer Metallplatte geformt ist.

6. Sicherheitsanordnung nach einem vorhergehenden Anspruch, wobei das Wandelement (9) plastisch verformbar ist.

7. Sicherheitsanordnung nach einem vorhergehenden Anspruch, die so eingerichtet ist, dass, wenn keine Bewegung des Wandelements (9) in Richtung der Batterie (4) gegeben ist, beim Füllen der Kammer (27) ein Spalt (28) zwischen der flexiblen Schicht (17) und der Batterie (4) definiert ist.

8. Sicherheitsanordnung nach Anspruch 7, wobei der Spalt (28) nicht mehr als 5 mm breit ist.

9. Sicherheitsanordnung nach Anspruch 7 oder Anspruch 8, die so eingerichtet ist, dass eine Verformung oder Bewegung des Wandelements (9) in Richtung der Batterie (4) bewirkt, dass der Spalt (28) so geschlossen wird, dass das flexible Element (17) auf zumindest einen Teil der Batterie (4) auftrifft.

10. Sicherheitsanordnung nach einem vorhergehenden Anspruch, wobei die flexible Schicht (17) aus Gewebematerial geformt ist.

11. Sicherheitsanordnung nach einem vorhergehenden Anspruch, die ein Paar der füllbaren Einheiten (8) umfasst, wobei die Einheiten (8) auf gegenüberliegenden Seiten der Batterie (4) angeordnet sind.

12. Sicherheitsanordnung nach Anspruch 11, die zwei derartige Paare von füllbaren Einheiten (8) umfasst, wobei die Einheiten (8) eines Paars entlang jeweiliger Seiten des Fahrzeugs (1) angeordnet sind und die Einheiten des anderen Paars auf der Vorder- beziehungsweise Rückseite der Batterie (4) angeordnet sind.

13. Sicherheitsanordnung nach Anspruch 12, wobei jede derartige Einheit (8) eines Paars zwischen den beiden Einheiten (8) des anderen Paars verbunden ist.

14. Sicherheitsanordnung nach einem vorhergehenden Anspruch, die eine Vielzahl der füllbaren Einheiten (8) umfasst, die in einer Gruppe um die Batterie (4) herum angeordnet sind, damit sie die Batterie (4) im Wesentlichen umschließen.

15. Sicherheitsanordnung nach einem vorhergehenden Anspruch, wobei es sich bei dem Kraftfahrzeug (1) um ein Elektro- oder Hybridfahrzeug handelt, das so eingerichtet ist, dass es von der Batterie (4) Antriebsleistung bezieht.

## Revendications

1. Dispositif de sécurité destiné à protéger un accumulateur (4) dans un véhicule motorisé (1) de dommages dans le cas où le véhicule (1) est impliqué dans un accident, le dispositif incluant une unité gonflable (8) comprenant : un gonfleur (G) configuré pour un actionnement lors de la réception d'un signal d'actionnement provenant d'un détecteur d'impact ; un élément de paroi (9) essentiellement rigide et une couche flexible (17), l'élément de paroi (9) étant monté espacé par rapport à l'accumulateur (4), et la couche flexible (17) étant essentiellement interposée entre l'élément de paroi (9) et l'accumulateur (4), de sorte que le gonflage de ladite chambre (27) par ledit gonfleur (G) lors de la réception dudit signal d'actionnement a pour effet de pousser ladite couche flexible (17) vers ledit accumulateur (4), **caractérisé en ce que** la couche flexible (17) est fabriquée en matériau en feuille fixé sur l'élément de paroi (9) rigide pour définir ainsi une chambre gonflable (27) entre ledit élément de paroi (9) et ladite couche flexible (17), destinée à être gonflée par le gonfleur (G).

2. Dispositif de sécurité selon la revendication 1, ledit élément de paroi (9) étant monté sur une partie structurale (6) du véhicule motorisé (1).

3. Dispositif de sécurité selon la revendication 2, ledit élément de paroi (9) étant monté sur un seuil de porte latéral (6) du véhicule motorisé (1), globalement adjacent à l'accumulateur (4).

4. Dispositif de sécurité selon une quelconque revendication précédente, l'élément de paroi (9) étant formé à partir de métal.

5. Dispositif de sécurité selon la revendication 4, l'élément de paroi (9) étant formé à partir d'une plaque de métal.

6. Dispositif de sécurité selon une quelconque revendication précédente, l'élément de paroi (9) étant plastiquement déformable.

7. Dispositif de sécurité selon une quelconque revendication précédente, configuré de sorte qu'en l'absence de tout mouvement dudit élément de paroi (9) vers ledit accumulateur (4), un interstice (28) est défini entre la couche flexible (17) et l'accumulateur (4) lors du gonflage de ladite chambre (27).

8. Dispositif de sécurité selon la revendication 7, ledit interstice (28) n'étant pas plus large que 5 mm.

9. Dispositif de sécurité selon la revendication 7 ou la revendication 8, configuré de sorte que la déformation ou le mouvement dudit élément de paroi (9) vers l'accumulateur (4) a pour effet de fermer ledit interstice (28) de sorte que l'élément flexible (17) heurte au moins une partie de l'accumulateur (4).

10. Dispositif de sécurité selon une quelconque revendication précédente, la couche flexible (17) étant formée à partir de matériau textile tissé.

11. Dispositif de sécurité selon une quelconque revendication précédente, comprenant une paire desdites unités gonflables (8), les unités (8) étant disposées sur des côtés opposés de l'accumulateur (4).

12. Dispositif de sécurité selon la revendication 11, comprenant deux dites paires d'unités gonflables (8), les unités (8) d'une paire étant disposées le long de côtés respectifs du véhicule (1), et les unités de l'autre paire étant disposées respectivement à l'avant et à l'arrière de l'accumulateur (4).

13. Dispositif de sécurité selon la revendication 12, chaque dite unité (8) d'une paire étant raccordée entre les deux unités (8) de l'autre paire.

14. Dispositif de sécurité selon une quelconque revendication précédente, comprenant une pluralité desdites unités gonflables (8) disposées en un groupement autour de l'accumulateur (4), de façon à essentiellement entourer l'accumulateur (4).

15. Dispositif de sécurité selon une quelconque revendication précédente, le véhicule motorisé (1) étant un véhicule électrique ou hybride configuré pour tirer de la puissance de propulsion dudit accumulateur (4).
